# EUROPÄISCHE PATENTANMELDUNG

(11) **EP 3 608 626 A1**
(43) Veröffentlichungstag der Anmeldung: **12.02.2020**
(21) Anmeldenummer: 18188484.2
(22) Anmeldetag: 10.08.2018
(51) Int. Cl.: G01B 11/24, G01M 11/02

(54) **VORRICHTUNG UND VERFAHREN ZUR GEOMETRISCHEN VERMESSUNG EINES OBJEKTS**

(71) Anmelder: TAYLOR HOBSON LIMITED, Leicester LE4 9JQ (GB)
(72) Erfinder: am Weg, Christian, 64289 Darmstadt (DE); May, Thilo, 64287 Darmstadt (DE)
(74) Vertreter: Weilnau, Carsten

(57) **Zusammenfassung**

Die vorliegende Erfindung betrifft ein Verfahren und eine Vorrichtung zur geometrischen Vermessung eines Objekts (14), mit:
- einem Träger (12) für das Objekt (14), welcher eine Axialrichtung (z) und eine Radialrichtung (x) definiert,
- einem Halter (26), welcher relativ zum Träger (12) bezüglich der Axialrichtung (z) und bezüglich der Radialrichtung (x) beweglich und mit einer Abstandsmesseinrichtung (30) versehen ist,
- zumindest einem Referenzobjekt (18, 19, 20), welches relativ zum Träger (12) fixierbar ist,
- wobei an einem von Halter (26) und Referenzobjekt (18, 19, 20) eine erste längserstreckte Referenzstruktur (22) und eine zweite längserstreckte Referenzstruktur (24) angeordnet sind und
- wobei an dem anderen von Halter (26) und Referenzobjekt (18, 19, 20) ein erster, zur ersten Referenzstruktur (22) ausgerichteter Referenzsensor (32) und ein zweiter, zur zweiten Referenzstruktur (24) ausgerichteter Referenzsensor (34) angeordnet sind und wobei zumindest die zweite oder die zweite und die erste Referenzstruktur (22, 24) um einen vorgegebenen Winkel sowohl gegenüber der Radialrichtung (x) als auch gegenüber der Axialrichtung (z) ausgerichtet ist bzw. sind.

## Beschreibung

### Technisches Gebiet

Die vorliegende Erfindung betrifft eine Vorrichtung zur geometrischen Vermessung eines Objekts, insbesondere von optischen Komponenten, wie zum Beispiel von Linsen. Die Erfindung betrifft zudem ein dementsprechendes Verfahren sowie ein Computerprogramm zur geometrischen Vermessung derartiger Objekte.

### Hintergrund

Zur Qualitätssicherung als auch zur Überwachung von industriellen Herstellungsprozessen, insbesondere im Bereich der Feinwerktechnik, Optik sowie in der Fertigungstechnik mechanischer und elektrischer Mikrostrukturen, besteht ein wachsender Bedarf hinsichtlich hochauflösender und präziser Vermessungen von Werkstücken oder allgemein von Objekten.

So ist aus der DE 10 2011 011 065 B4 eine Vorrichtung zur Vermessung zumindest eines Oberflächenabschnitts eines auf einem Träger gelagerten Objekts bekannt. Die Vorrichtung weist dabei ein gegenüber dem Träger fixierbares Referenzobjekt und einen in zumindest einer ersten Richtung gegenüber dem Referenzobjekt beweglichen Halter auf. An dem Halter sind ein Referenzkörper sowie ein Abstandssensor angeordnet, die relativ zueinander drehbar gelagert sind. Die Abstandsmesseinrichtung ist dabei dazu ausgebildet, einen ersten Abstand zu einem ersten Punkt des Oberflächenabschnitts des Objekts und einen zweiten Abstand zu einem hiermit korrespondierenden zweiten Punkt des Referenzkörpers zu bestimmen. Die als Abstandsmesser bezeichnete Abstandsmesseinrichtung weist dabei einen ersten, dem Objekt zugewandten Abstandssensor und einen zweiten, dem Referenzkörper zugewandten Abstandssensor auf. Diese sind dabei diametral entgegengesetzt zueinander ausgerichtet.

Mit einer derartigen Vorrichtung kann die Oberfläche eines Objekts hochpräzise und berührungslos optisch abgetastet bzw. gescannt werden.

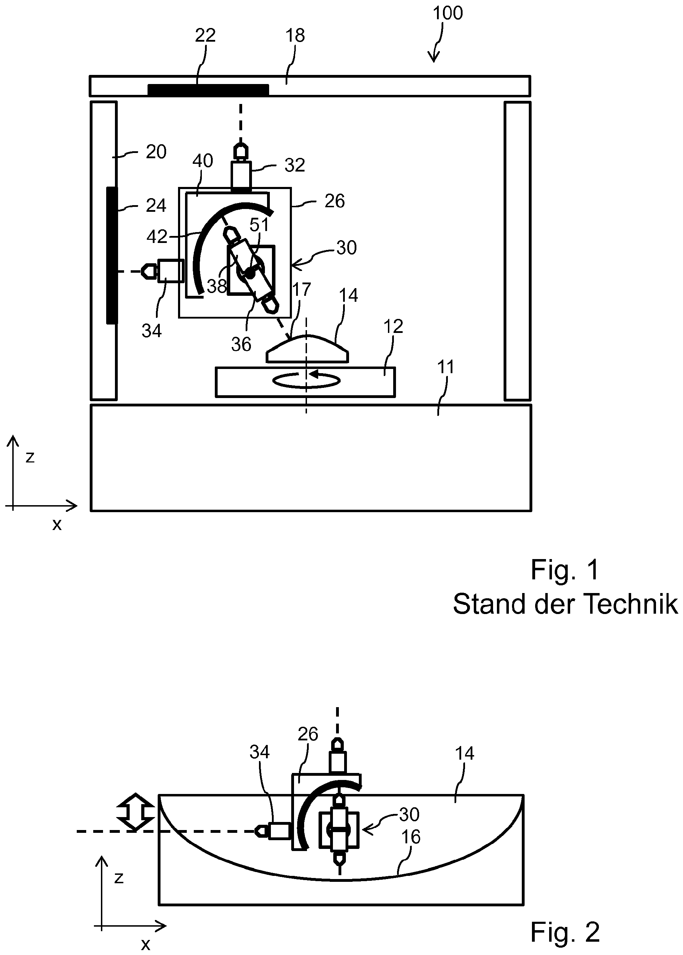

Die aus der DE 10 2011 011 065 B4 grundsätzlich bekannte Vorrichtung ist in Fig. 1 schematisch dargestellt. Die Vorrichtung 100 weist einen Träger 12 auf, an dem ein zu bemessendes Objekt 14, wie zum Beispiel eine Linse, drehbar oder verschiebbar gelagert ist. Die Vorrichtung 100 weist ferner einen in der in Fig. 1 gezeigten x-z-Ebene beweglichen Halter 26 auf, an welchem eine Abstandsmesseinrichtung 30 angeordnet ist. Die Abstandsmesseinrichtung 30 weist einen dem Objekt 14 zugewandten ersten Abstandssensor 36 sowie einen zweiten Abstandssensor 38 auf, welcher dem Objekt abgewandt zu einem Referenzkörper 40 ausgerichtet ist. Der Referenzkörper kann eine als Zylinderinnenwandung ausgebildete reflektierende bzw. spiegelnde Referenzfläche 42 aufweisen. Diese kann zum Beispiel als Hohlspiegel ausgestaltet sein. Der zweite Abstandssensor 38 kann relativ zum ersten Abstandssensor 36 diametral angeordnet und entgegensetzt ausgerichtet sein. Die beiden Abstandssensoren 36, 38 sind starr miteinander gekoppelt.

Der Abstandssensor 36 ist auf die zu vermessende Oberfläche 16 des Objekts 14 gerichtet. Die Abstandssensoren 36, 38 sind als optische Abstandssensoren und somit zur Emission und Detektion von Lichtsignalen ausgebildet. Die Sensoren 36, 38 messen in Reflexionsgeometrie. Das heißt einer auf einen Messpunkt 17 des Objekts 14 gerichteter Messstrahl wird entsprechend der Oberflächenkontur des Objekts 14 reflektiert und zurückgespiegelt und aufgrund einer annähernd orthogonalen Ausrichtung des Messstrahls zur Oberfläche 16 des Objekts 14 wieder vom Sensor 36 detektiert und schließlich einer mit dem Abstandssensor 36 gekoppelten Steuerung einer Sensor- und Detektionseinheit zugeführt. Je nach Kontur des zu vermessenden Objekts 14 und der relativen Positionierung des Halters 26 gegenüber dem Objekt 14 ist die Ausrichtung bzw. Orientierung der Abstandssensoren 36, 38 bezüglich einer Drehachse 51 am Halter 26 zu verändern und zur Einhaltung der für die Messung erforderlichen Orthogonalitätsbedingung jeweils adaptiv anzupassen.

Um ferner die Position der Abstandsmesseinrichtung 30, insbesondere der beiden Abstandssensoren 36, 38 als auch die Position des Referenzkörpers 40 in der x-z-Ebene präzise zu bestimmen, sind am Halter 26 zwei weitere, vorliegend als Referenzsensoren 32, 34 bezeichnete Abstandssensoren vorgesehen, die entsprechend der Verschiebe- oder Bewegungsrichtungen (x, z) des Trägers 26 relativ zu ortsfesten Referenzobjekten 18, 20 ausgerichtet sind und mittels derer ein axialer Abstand des Trägers 26 zur Referenzfläche 22 des Referenzobjekts 18 in z-Richtung und ein radialer Abstand in x-Richtung zum weiteren ortsfest angeordneten Referenzobjekt 20 und zu dessen Referenzfläche 24 messbar ist.

Insbesondere bei stark gekrümmten, etwa konkav gewölbten Oberflächen 16 von zu vermessenden Objekten 14 kann es sich als schwierig erweisen, die Abstandsmesseinrichtung 30 in einem geforderten Abstand und in der für die Abstandsmessung erforderlichen Ausrichtung relativ zur Oberfläche 16 des Objekts 14 zu positionieren. Wie beispielsweise in Fig. 2 dargestellt, können Situationen auftreten, in welchen ein Referenzsensor 34 bezüglich einer Axialrichtung (z) in einen Hohlraum der Oberfläche 16 des Objekts 14 eintaucht wodurch die vom Referenzsensor 34 emittierten Signale vom Objekt 14 bzw. von seiner Oberfläche 16 absorbiert oder gestreut werden. Eine Referenzierung zum entsprechenden Referenzobjekt 20 ist dann nicht mehr möglich. Der Abstand der Abstandsmesseinrichtung 30 zur Oberfläche 16 muss dementsprechend vergrößert werden, was mitunter zu Lasten der Messgenauigkeit und Messgeschwindigkeit geht.

Aufgrund eines begrenzten Akzeptanzwinkels des Abstandssensors 36 sollte für einen praktikablen Betrieb der Messvorrichtung ein Abstand zwischen dem Abstandssensor 36 und der zu vermessenden Oberfläche 16 des Objekts 14 möglichst gering gewählt werden. Hinzu kommt, dass ein vom Abstandssensor 36 auf das Objekt gerichteter Messstrahl typischerweise auf die Objektoberfläche fokussiert ist, um für eine scannende Erfassung der Objektoberfläche eine möglichst hohe transversale räumliche Auflösung zu erhalten.

Demgegenüber liegt der vorliegenden Erfindung die Aufgabe zugrunde, eine verbesserte Vorrichtung und ein Verfahren sowie ein Computerprogramm zur geometrischen Vermessung eines Objekts bereitzustellen, die dazu geeignet sind, vergleichsweise stark gekrümmte Oberflächen von zu vermessenden Objekt zuverlässig, präzise und zügig zu erfassen, insbesondere zu scannen. Hierbei sollen etwaige Kollisionen oder durch das Objekt oder dessen Oberfläche bedingte Abschattungen von Signalen der Referenzsensoren sicher vermieden werden können, ohne dabei die Messgenauigkeit oder Messgeschwindigkeit einzuschränken.

Zudem sollte die Vermessung vergleichsweise großflächiger Objekte, insbesondere von Objekten mit einer vergleichsweise großen Erstreckung bezüglich einer Radialrichtung oder transversaler Richtung, d. h. senkrecht zur Axialrichtung eines Trägers ermöglicht werden, ohne hierfür die räumlichen Dimensionen der Vorrichtung wesentlich zu erhöhen. Bei möglichst gleichbleibender Kubatur der Vorrichtung soll diese für die Vermessung vergleichsweise großer Objekte geeignet sein.

Diese Aufgabe wird mit einer Vorrichtung gemäß dem unabhängigen Patentanspruch 1, einem Verfahren nach Patentanspruch 14 sowie mit einem Computerprogramm nach Patentanspruch 15 gelöst. Vorteilhafte Ausgestaltungen sind dabei Gegenstand abhängiger Patentansprüche.

Insoweit ist eine Vorrichtung zur geometrischen Vermessung eines Objekts vorgesehen. Die Vorrichtung weist einen Träger für das Objekt auf. Der Träger für das Objekt definiert eine Axialrichtung (z) und eine Radialrichtung (x). Die Axialrichtung und die Radialrichtung sind typischerweise an gängige Zylinderkoordinaten angelehnt. Der Träger für das Objekt fungiert insbesondere als Träger für eine optische Komponente. Wenn das Objekt, beispielsweise eine Linse auf dem Träger platziert oder montiert ist fällt die optische Achse des Objekts typischerweise mit der Axialrichtung des Trägers zusammen oder sie erstreckt sich parallel hierzu.

Der Träger kann drehbar an einer Basis gelagert sein. Je nach Objektbeschaffenheit kann der Träger aber auch transversal, bzw. längsverschieblich, bspw. senkrecht zur Axialrichtung relativ zur Basis der Vorrichtung gelagert sein.

Die Vorrichtung weist ferner einen Halter auf, welcher relativ zum Träger bezüglich der Axialrichtung und bezüglich der Radialrichtung beweglich ist. Typischerweise ist der Halter in einer Ebene relativ zum Träger verfahrbar oder verschiebbar, welche von der Axialrichtung und der Radialrichtung des Trägers aufgespannt wird. Somit kann der Halter den Träger in der von Axialrichtung und Radialrichtung aufgespannten Ebene abscannen.

Der Träger kann drehbar gelagert sein, sodass durch eine Drehung des am Träger angeordneten Objekts die dem Halter zugewandten Oberfläche des Objekts vollständig mit einer am Halter angeordneten Abstandsmesseinrichtung abscannbar ist. Die Vorrichtung umfasst ferner eine solche Abstandsmesseinrichtung, welche am Halter angeordnet ist.

Die Abstandsmesseinrichtung ist dazu ausgebildet, einen Abstand zur Oberfläche eines am Träger angeordneten Objekts zu bestimmen. Die Abstandsmesseinrichtung ist typischerweise als berührungslose Abstandsmesseinrichtung ausgebildet. Sie weist z.B. einen optisch implementierten Abstandsmesser auf, welcher in Reflexionsgeometrie einen bzw. mehrere Abstände zu einem bzw. mehreren Punkten auf der Oberfläche des Objekts ermittelt und somit quasi eine Oberflächenkontur punktweise oder linienweise abgescannt.

Die Vorrichtung weist ferner ein gegenüber dem Träger fixierbares Referenzobjekt auf. Der Träger und das Referenzobjekt sind typischerweise ortsfest angeordnet und stehen in einem festen geometrischen Bezug zueinander.

An einem von Halter und Referenzobjekt sind eine erste längserstreckte Referenzstruktur und eine zweite längserstreckte Referenzstruktur angeordnet. An dem anderen von Halter und Referenzobjekt sind ferner ein erster, zur ersten Referenzstruktur ausgerichteter Referenzsensor und ein zweiter, zur zweiten Referenzstruktur ausgerichteter Referenzsensor angeordnet. Es ist denkbar und vorgesehen, dass die Referenzstrukturen am ortsfesten Referenzobjekt oder an mehreren ortsfesten Referenzobjekten angeordnet sind und dass die den jeweiligen Referenzstrukturen zugewandten Referenzsensoren am Halter der Vorrichtung angeordnet sind.

Die erste Referenzstruktur und die zweite Referenzstruktur erstrecken sich unter einem vorgegebenen Winkel zueinander. Durch Messung eines Abstandes zwischen dem ersten Referenzsensor und der ersten Referenzstruktur sowie durch Messung eines zweiten Abstandes zwischen dem zweiten Referenzsensor und der zweiten Referenzstruktur kann die Position des Halters in der von der Längserstreckung der beiden Referenzstrukturen aufgespannten Ebene präzise ermittelt werden.

Andere Ausgestaltungen sehen vor, dass die erste und die zweite Referenzstruktur am Halter angeordnet sind. Die hiermit korrespondierenden Referenzsensoren sind dann am Referenzobjekt oder an mehreren zur Verfügung stehenden Referenzobjekten angeordnet und in Richtung zur jeweiligen Referenzstruktur ausgerichtet. Somit kann gleichermaßen der Abstand bzw. die Position des Halters bezüglich der Axialrichtung (z) und der Radialrichtung (x) relativ zum Träger bzw. relativ zum Referenzobjekt oder zu den Referenzobjekten ermittelt und bestimmt werden.

Es ist ferner vorgesehen, dass die erste Referenzstruktur in Radialrichtung (x) ausgerichtet ist und die zweite Referenzstruktur um einen vorgegebenen Winkel gegenüber der Axialrichtung (z) geneigt ausgerichtet ist. Alternativ hierzu können die erste Referenzstruktur und die zweite Referenzstruktur jeweils um einen vorgegebenen Winkel sowohl gegenüber der Radialrichtung (x) also gegenüber der Axialrichtung (z) ausgerichtet sein. Für jedwede hier vorgesehene Ausrichtung von erster und/oder zweiter Referenzstruktur erweist es sich von Vorteil, dass zumindest der zweite Referenzsensor nicht mehr horizontal sondern gegenüber einer Horizontalen nach oben geneigt ausgerichtet ist. Dies ermöglicht ein Eintauchen in z.B. hohle Strukturen oder Hinterschneidungsbereichen auf oder an der Oberfläche des Objekts. Insbesondere können hierdurch vergleichsweise große konkave Strukturen eines Objekts präzise und unter Einhaltung eines maximalen des Abstandes präzise und zügig abgescannt und vermessen werden.

Typischerweise erstreckt sich keine der beiden Referenzstrukturen in Vertikalrichtung. Eine der beiden Referenzstrukturen kann sich hingegen in Horizontalrichtung, d. h. in Radialrichtung oder transversal, d. h. orthogonal zur Axialrichtung erstrecken. Typischerweise kann die erste Referenzstruktur, mithin das erste Referenzobjekt bezogen auf die Axialrichtung oberhalb des Halters angeordnet sein. Der Halter befindet sich dabei bezogen auf die Axialrichtung (z) zwischen dem Träger und dem ersten Referenzobjekt.

Das zweite Referenzobjekt bzw. die zweite Referenzstruktur kann sich seitlich bzw. horizontal beabstandet vom Halter befinden. Die zweite Referenzstruktur ist typischerweise mit ihrer Flächennormalen in Richtung zum Träger ausgerichtet. Sie kann bezogen auf eine Flächennormale des Trägers oder des hieran angeordneten Objekts radial versetzt angeordnet sein. Eine derart geneigte Anordnung des zweiten Referenzobjekts, mithin der zweiten Referenzstruktur ermöglicht eine Vergrößerung des radialen Messbereichs der Vorrichtung. Ferner können Objekte mit einer vergleichsweise stark gekrümmten Oberflächenkontur, insbesondere konkav gewölbte Objekte präzise vermessen werden ohne dass das Objekt oder Bereiche hiervon zwischen den zweiten Referenzsensor und die zweite Referenzstruktur gelangen.

Nach einer weiteren Ausgestaltung weist die zweite Referenzstruktur mit größer werdendem axialem Abstand zum Träger einen kleiner werdenden radialen Abstand zum Träger auf. Mit anderen Worten ist die zweite Referenzstruktur nach oben in die Horizontalrichtung oder Radialrichtung zum Träger hin geneigt ausgerichtet. Die zweite Referenzstruktur, insbesondere auch das zweite Referenzobjekt kann oder können eine im Wesentlichen geradlinige oder ebene Kontur aufweisen. Entsprechend der Neigung der zweiten Referenzstruktur ist auch der typischerweise am Halter angeordnete zweite Referenzsensor nach oben geneigt ausgerichtet. Eine Abschattung des Halters durch konkave oder hohle Oberflächenbereiche des Objekts kann hierdurch weitgehend vermieden und ausgeschlossen werden.

Nach einer weiteren Ausgestaltung ist die Referenzstruktur um einen Winkel zwischen 5° bis 75°, um einen Winkel zwischen 30° bis 60°, um einen Winkel zwischen 40° bis 50° oder um einen Winkel von in etwa 45° gegenüber der Axialrichtung (z) geneigt ausgerichtet. Alternativ hierzu kann die zweite Referenzstruktur um einen Winkel zwischen 5° bis 30°, um einen Winkel zwischen 5° bis 25°, um einen Winkel zwischen 10° bis 20° oder um einen Winkel von in etwa 15° gegenüber der Axialrichtung (z) geneigt ausgerichtet sein.

Derartige Neigungen ermöglichen eine Vergrößerung des radialen Messbereichs der Vorrichtung, ohne die Außenabmessungen der Vorrichtung merklich zu vergrößern. Solche Winkelbereiche für die Ausrichtung der zweiten Referenzstruktur, mithin auch für die Ausrichtung des zweiten Referenzobjekts ermöglichen eine entsprechende Ausrichtung des zweiten Referenzsensors, welcher typischerweise am Halter angeordnet ist.

Eine dementsprechende Vergrößerung des radialen, bzw. horizontalen Messbereichs der Vorrichtung ist die Folge. Die erste Referenzstruktur kann in einem festen Winkelverhältnis zur zweiten Referenzstruktur ausgerichtet sein. Beispielsweise kann die erste Referenzstruktur in einem rechten Winkel oder in einem 90°-Winkel zur zweiten Referenzstruktur ausgerichtet sein. So kann ein Winkel zwischen der Längserstreckung der ersten Referenzstruktur und der Längserstreckung der zweiten Referenzstruktur zwischen 60° und 175°, zwischen 75 und 115°, zwischen 75° und 135°, zwischen 75° und 145° oder in etwa 90° oder mehr betragen. Für die geometrische Vermessung des Objekts kann es von Vorteil sein, wenn die Längserstreckung der ersten Referenzstruktur parallel zur Radialrichtung, d. h. waagerecht verläuft. Die Längserstreckung der zweiten Referenzstruktur kann demgegenüber etwa in einem Winkelbereich von 90° bis 175°, von 90° bis 160°, von 90° bis 145°, von 90° bis 135° oder von 90° bis 120° hierzu nach unten, d.h. zum Träger hin, geneigt verlaufen.

Entsprechend der wechselseitigen Ausrichtungen der ersten und der zweiten Referenzstruktur sind auch die ersten und die zweiten Referenzsensoren zueinander ausgerichtet, damit der erste Sensor im Wesentlichen senkrecht zur ersten Referenzstruktur ausgerichtet ist und damit auch der zweite Sensor im Wesentlichen senkrecht zur zweiten Referenzstruktur ausgerichtet ist. Der erste und der zweite Referenzsensor sind typischerweise als optische Sensoren zur Messung eines Abstandes zur jeweiligen Referenzstruktur ausgebildet.

Bei einer Ausgestaltung kann zum Beispiel die zweite Referenzstruktur um einen Winkel von in etwa 45° gegenüber der Axialrichtung geneigt ausgerichtet sein. Die erste Referenzstruktur kann dabei um einen Winkel von etwa 90° gegenüber der Längserstreckung der zweiten Referenzstruktur ausgerichtet sein. Mithin kann die erste Referenzstruktur ebenfalls um 45° geneigt zur Axialrichtung ausgerichtet sein. Eine orthogonale Ausrichtung von erster und zweiter Referenzstruktur ermöglicht eine besonders einfache Referenzierung, etwa auf Basis eines kartesischen Koordinatensystems.

Andere Ausgestaltungen, bei welchen die zweite Referenzstruktur um einen Winkel zwischen 10° und 20°, beispielsweise um einen Winkel von etwa 15° gegenüber der Axialrichtung geneigt ausgerichtet ist, erweisen sich für solche Vorrichtungen als besonders vorteilhaft, welche zur Vermessung vergleichsweise großer Objekte ausgestaltet sind. Bei einer vorgegebenen Verstellbarkeit oder Verfahrstrecke des Trägers in Axialrichtung muss mit einem größer werdenden Winkel der zweiten Referenzstruktur gegenüber der Axialrichtung die Länge der betreffenden Referenzstruktur entsprechend angepasst werden.

Hierbei gilt, dass die Länge der Referenzstruktur mit der Größe des von der Axialrichtung abweichenden Winkels ansteigt. Herstellungs- und messtechnisch ist es jedoch vorteilhaft, dass die Referenzstruktur, beispielsweise in Form eines Spiegels, möglichst kompakt ausgestaltet ist. Von daher kann der genannte Winkelbereich zwischen 10° und 20° ein Optimum oder zumindest einen guten Kompromiss zwischen einer Vergrößerung des Messbereichs bei einer gleichzeitig kompakten Bauweise der Vorrichtung darstellen.

Nach einer weiteren Ausgestaltung sind die erste und die zweite längserstreckte Referenzstruktur an zumindest einem gemeinsamen Referenzobjekt oder an zwei zueinander fixierten Referenzobjekten angeordnet. Bei Vorsehen eines einzigen Referenzobjekts, beispielsweise eines L-förmigen Referenzobjekts sind die erste und die zweite, typischerweise als Spiegelflächen ausgestalteten Referenzstrukturen fest und unbeweglich zueinander am einzigen Referenzobjekt angeordnet. Sind zwei Referenzobjekte vorgesehen, so können die erste und die zweite Referenzstruktur auch beispielsweise zu Zwecken einer Kalibrierung zueinander justiert bzw. zueinander bedarfsgerecht ausgerichtet werden.

Nach einer weiteren Ausgestaltung ist der erste Referenzsensor am Halter angeordnet und senkrecht zur Längserstreckung der ersten Referenzstruktur ausgerichtet. Der zweite Referenzsensor ist ebenfalls am Halter angeordnet und ist senkrecht zur Längserstreckung der zweiten Referenzstruktur ausgerichtet. Der Halter ist insbesondere drehfest in Bezug auf die Referenzstruktur bzw. in Bezug auf das zumindest eine Referenzobjekt angeordnet. Er ist lediglich translatorisch gegenüber den Referenzstrukturen bzw. dem zumindest einen Referenzobjekt beweglich an der Vorrichtung angeordnet.

Eine umgekehrte Konstellation, bei welcher die Referenzstrukturen am Halter, typischerweise an einer Außenseite des Halters angeordnet sind und bei welcher die mit den Referenzstrukturen zusammenwirkenden Referenzsensor an den zumindest einem Referenzobjekt oder an mehreren Referenzobjekten verteilt angeordnet sind, sind gleichermaßen denkbar. Sämtliche zuvor beschriebenen Merkmale im Hinblick auf eine Anordnung der Referenzstrukturen an den Referenzobjekten und der Referenzsensoren am Halter gelten auch für die umgekehrte Konstellation, bei welcher die Referenzstrukturen am Halter angeordnet sind und die Referenzsensor an dem oder an den Referenzobjekten angeordnet sind.

Nach einer weiteren Ausgestaltung ist die Abstandsmesseinrichtung zumindest bezüglich einer ersten Achse schwenkbar am Halter gelagert. Die erste Achse kann sich typischerweise senkrecht oder unter einem vorgegebenen Winkel zur Axialrichtung als auch zur Radialrichtung erstreckenden. Gemäß der schwenkbaren Lagerung der Abstandsmesseinrichtung am Halter kann jeder Punkt auf der Oberfläche des Objekts in Reflexionsgeometrie und unter Einhaltung der Orthogonalitätsbedingung für die Abstandsmesseinrichtung angefahren und optisch abgetastet werden. Hierzu ist mitunter eine drehbare und/oder translatorisch verschiebbare Lagerung des Objekts relativ zum Halter bezüglich der dritten Dimension, d. h. senkrecht zur Radialrichtung als auch senkrecht zur Axialrichtung erforderlich und vorgesehen.

Nach einer weiteren Ausgestaltung fällt die erste Achse mit einem Schnittpunkt einer gedachten ersten Verlängerung einer ersten Messrichtung des ersten Referenzsensors und einer gedachten zweiten Verlängerung einer zweiten Messrichtung des zweiten Referenzsensors zusammen. Jene Überlagerung der Drehachse der Abstandsmesseinrichtung mit den gedachten Verlängerungen der Messrichtungen von erstem und zweitem Referenzsensor ist für die präzise Positions- und Lagebestimmung des Halters bzw. der ihren schwenkbar gelagerten Abstandsmesseinrichtung von Vorteil. Etwaige toleranzbedingte Verkippungen des Halters haben insoweit keinen oder nur einen vernachlässigbaren Einfluss auf das Messergebnis der Abstandsmessung zum Objekt. Die Lagebestimmung des Halters auf Basis der Referenzsensoren und der hiermit zusammenwirkenden Referenzstrukturen sind insoweit weitgehend invariant zur Drehbewegung der Abstandsmesseinrichtung.

Nach einer weiteren Ausgestaltung ist an dem Halter ein Referenzkörper angeordnet. Die Abstandsmesseinrichtung am Halter ist zur Messung eines Abstandes zwischen dem Referenzkörper und einer Oberfläche des Objekts ausgebildet, wenn das Objekt am Träger angeordnet ist. Dies hat den Vorteil, als dass etwaige durch die Drehbewegung der Abstandsmesseinrichtung induzierte Positionsungenauigkeiten mittels des Referenzkörpers kompensiert werden können. Der Referenzkörper ist drehfest gegenüber den Referenzobjekten am beweglichen Halter angeordnet. Der Referenzkörper weist typischerweise eine spiegelnde und dem Träger der Vorrichtung zugewandte Oberfläche mit einer bekannten Oberflächengeometrie auf. Durch Messung eines Abstandes einerseits in Richtung zum Objekt und andererseits in Richtung zum Referenzkörper kann eine durch die Drehbewegung der Abstandsmesseinrichtung induzierte Positionsungenauigkeit der Abstandsmesseinrichtung kompensiert werden.

Wird durch eine Drehbewegung der Abstandsmesseinrichtung beispielsweise der Abstand zwischen der Abstandsmesseinrichtung und einem vorgegebenen Messpunkt auf der Oberfläche des Objekts verkürzt wird gleichermaßen der Abstand zwischen der Abstandsmesseinrichtung und einem diametral gegenüberliegenden Messpunkt am Referenzkörper in gleichem Maße vergrößert.

Nach einer weiteren Ausgestaltung weist die Vorrichtung eine dritte längserstreckte Referenzstruktur auf, die an einem vom Halter und dem Referenzobjekt angeordnet ist und die sich unter einem vorgegebenen Winkel geneigt zur ersten Referenzstruktur und zur zweiten Referenzstruktur erstreckt. Mittels der dritten längserstreckten Referenzstruktur kann die Position des Halters hinsichtlich sämtlicher drei Raumkoordinaten in Bezug auf die Referenzobjekte ermittelt werden. Dies ermöglicht prinzipiell eine freie Beweglichkeit des Halters in sämtlichen drei Raumdimensionen. Auch können der Halter bezüglich zweier Raumdimensionen bewegt und die daran angeordnete Abstandsmesseinrichtung bezüglich zweier Achsen verschwenkt werden.

Aber auch für eine Beweglichkeit des Halters, die auf die Axialrichtung und die Radialrichtung, somit auf eine Bewegung in einer einzigen Ebene beschränkt ist kann die dritte Referenzstruktur für die Ermittlung der Position und/oder Ausrichtung der Abstandmesseinrichtung von Vorteil sein. Insbesondere kann mittels der dritten Referenzstruktur eine durch die Neigung oder Drehung der Abstandsmesseinrichtung bedingten Positionsungenauigkeit bezüglich einer ermittelt, bestimmt und hierdurch bedingte etwaige Positionsungenauigkeiten kompensiert werden.

Nach einer weiteren Ausgestaltung weist die Vorrichtung ferner einen dritten Referenzsensor auf, der an dem anderen von Halter und Referenzobjekt angeordnet ist und welcher im Wesentlichen senkrecht zur Längserstreckung der dritten Referenzstruktur ausgerichtet ist. Mittels des dritten Referenzsensors kann ein Abstand zwischen dem Halter und dem dritten Referenzobjekt präzise ermittelt werden. Eine gedachte dritte Verlängerung einer dritten Messrichtung des dritten Referenzsensors kann dabei mit zumindest einer von der ersten Verlängerung der ersten Messrichtung des ersten Referenzsensors und der gedachten zweiten Verlängerung einer zweiten Messrichtung des zweiten Referenzsensors zusammenfallen. Mithin können sich sämtliche Verlängerungen sämtlicher Referenzsensoren in einem Punkt schneiden. Jener Schnittpunkt fällt bevorzugt mit einer Drehachse der Abstandsmesseinrichtung zusammen.

Nach einer weiteren Ausgestaltung weist die dritte Referenzstruktur eine Referenzebene auf, die sich unter einem vorgegebenen Winkel geneigt zur ersten Referenzstruktur und zur zweiten Referenzstruktur erstreckt. Das Bereitstellen einer Referenzebene ermöglicht insbesondere eine Verfahrbarkeit oder Verschiebbarkeit des Halters in der von der Axialrichtung und Radialrichtung aufgespannten Ebene. Die dritte Referenzstruktur, insbesondere die Referenzebene der dritten Referenzstruktur kann sich unter einem vorgegebenen Winkel, etwa kleiner als 90° und größer als 15° zur Axialrichtung erstrecken.

Die Referenzebene der dritten Referenzstruktur kann sich ferner typischerweise in Tangentialrichtung erstrecken. Die dritte Referenzstruktur kann mit größer werdendem axialem Abstand zum Träger einen kleiner werdenden radialen Abstand zum Träger aufweisen. Die Flächennormale der Referenzebene kann typischerweise in Richtung zum Träger ausgerichtet sein. Die dritte Referenzebene kann bezogen auf die Radialrichtung (x) axial versetzt zur Flächennormalen des Trägers angeordnet sein. Insoweit erstreckt sich die Referenzebene der dritten Referenzstruktur von radial innen nach radial außen betrachtet nach unten geneigt. Von radial außen nach radial innen betrachtet erstreckt sie sich nach oben geneigt.

Nach einer weiteren Ausgestaltung ist die Abstandsmesseinrichtung zumindest bezüglich einer zweiten Achse schwenkbar am Halter gelagert. Die zweite Achse erstreckt sich dabei unter einem vorgegebenen Winkel geneigt zur ersten Achse. Die erste und die zweite Achse, bezüglich welcher die Abstandsmesseinrichtung schwenkbar am Halter gelagert sind, können sich beispielsweise unter einem Winkel von 90° zueinander erstrecken. Gedachte Verlängerungen der ersten Achse und der zweiten Achse können sich beispielsweise auch in einem Punkt schneiden.

Mittels des dritten Referenzsensors und seinem Zusammenwirken mit der dritten Referenzstruktur können etwaige Positionsungenauigkeiten der Abstandsmesseinrichtung infolge einer Schwenkbewegung bezüglich der zweiten Achse präzise ermittelt bzw. gemessen und dementsprechend rechnerisch kompensiert werden.

In einer typischen Konfiguration kann nämlich vorgesehen sein, dass sich das erste Referenzobjekt bzw. die erste Referenzstruktur zumindest mit einer Richtung Komponente entlang der Radialrichtung (x) erstreckt, dass sich zweite Referenzobjekt bzw. die zweite Referenzstruktur zumindest mit einer Richtungskomponente entlang der Axialrichtung (z) erstreckt und dass sich eine erste Achse, bezüglich welcher die Abstandsmesseinrichtung drehbar am Halter gelagert ist, in Tangentialrichtung, mithin senkrecht zur Radialrichtung als auch senkrecht zur Axialrichtung erstreckt. So kann die Abstandsmesseinrichtung zur ersten Achse schwenkbar sein, die sich im Wesentlichen parallel zur Flächennormalen der von der Axialrichtung und Radialrichtung aufgespannten Ebene erstreckt.

Bei der hierauf aufbauenden Ausgestaltung, bei welcher die Abstandsmesseinrichtung zusätzlich noch zu einer zweiten Achse schwenkbar am Halter gelagert ist können durch die hierdurch ermöglichte quasi zweite schwenkbare Lagerung Positionsungenauigkeiten der Abstandsmesseinrichtung im Hinblick auf die Referenzobjekte auftreten. Solche Positionsungenauigkeiten können z.B. durch mechanische Achsenfehler bedingt sein. Durch die Schwenkbarkeit der Abstandsmesseinrichtung bezüglich zweier Achsen am Träger können solche Positionsungenauigkeiten jedoch in Messrichtung der Abstandsmesseinrichtung liegen. Mittels der dritten Referenzstruktur und des dritten Referenzobjekts sowie mittels des hierauf gerichteten dritten Referenzsensors können solche, in Messrichtung liegenden Positionsungenauigkeiten präzise erfasst und demgemäß rechnerisch kompensiert werden.

Nach einer weiteren Ausgestaltung ist ferner vorgesehen, dass zumindest eine von erster und zweiter Referenzstruktur einen geradlinig verlaufenden längserstreckten spiegelnden Streifen aufweist. Mithin können die erste und die zweite Referenzstruktur quasi als eindimensionale Referenzstrukturen ausgebildet sein, die jeweils nur ein Verfahren oder eine längsverschiebliche Bewegung des Halters in Längsrichtung der jeweiligen Referenzstruktur erlauben und die Bewegung des Halters insoweit einschränken.

Sowohl die erste als auch die zweite Referenzstruktur können einen geradlinig verlaufenden längserstreckten spiegelnden Streifen aufweisen. Bezüglich der Axialrichtung und der Radialrichtung ist der Halter somit in einer einzigen, mit der ersten und der zweiten Referenzstruktur zusammenfallenden Ebene relativ zum Referenzobjekt bzw. relativ zu den Referenzobjekten beweglich gelagert.

Die Abstandssensoren bzw. Referenzsensoren sind typischerweise mit mehreren Lichtquellen unterschiedlicher Wellenlänge gekoppelt, um den Abstand zum Objekt oder zum Referenzkörper oder Referenzobjekt mittels eines Mehrwellenlängenmessprinzips zu bestimmen. Ein derartiges Heterodyn-Messverfahren ermöglicht eine hochpräzise Abstandsmessung mit einer Auflösung im Nanometer- und Subnanometerbereich und kann ferner einen Eindeutigkeitsbereich des Messergebnisses bis in den Millimeterbereich hinein bereitstellen. Bevorzugt werden als Lichtquellen weitgehend monochromatische Laser vorgesehen, deren Wellenlänge im Bereich zwischen 1520 und 1630 nm liegt. Typischerweise liegen die verwendeten Laserwellenlängen im S-, C- oder L-Band des optischen Telekommunikationsspektrums. Es sind aber auch grundsätzlich Wellenlängen im sichtbaren und/oder UV-Spektralbereich denkbar.

Prinzipiell ist die Erfindung auch für eine mit lediglich einer Wellenlänge operierende Abstandsmesseinrichtung implementierbar. Mittels eines Mehrwellenlängen-Messverfahrens kann jedoch der Eindeutigkeitsbereich der empfangenen Signale sichtlich vergrößert werden. Die jeweilige Phase oder Phasenlage der von der Objektoberfläche reflektierten Strahlen wird wellenlängenselektiv detektiert und im Zuge einer elektronischen Auswertung zur Bestimmung des Abstandes verarbeitet.

Die Abstandssensoren können ferner faseroptisch mit den betreffenden Lichtquellen gekoppelt sein. Etwaige umweltbedingte Störeinflüsse können auf diese Art und Weise auf ein Minimum begrenzt werden.

Nach einer weiteren Ausgestaltung weist die Vorrichtung ferner einen als Detektionseinheit ausgestaltete Steuerung auf, mittels welcher aus dem ersten Abstand und dem zweiten Abstand die Position und die Ausrichtung des Halters oder seines Referenzkörpers relativ zum zumindest einen Referenzobjekt präzise bestimmbar ist. Insbesondere kann aus einem Vergleich und/oder aus einer Mittelwertbildung, der unabhängig voneinander gemessenen ersten und zweiten Abstände sowohl die Position des Halters als auch seine Neigung bzw. Verkippung in der Messebene (x, z) bestimmt werden. Insbesondere ist hiermit die Lage der Drehachse der Abstandsmesseinrichtung präzise bestimmbar.

Nach einem weiteren Aspekt betrifft die Erfindung ferner ein Verfahren zur geometrischen Vermessung eines Objekts mittels einer zuvor beschriebenen Vorrichtung, wobei die Oberfläche eines am Träger gelagerten Objekts mittels der Abstandsmesseinrichtung scannend erfasst, bzw. vermessen wird. Die Oberflächenkontur eines am Träger gelagerten Objekts wird dabei mittels der am Halter drehbar angeordneten Abstandsmesseinrichtung scannend, das heißt oberflächenabtastend erfasst. Einzelne Messpunkte der Oberfläche des Objekts werden nacheinander mit einem Messstrahl beaufschlagt, sodass für jeden Messpunkt ein Abstand ermittelbar ist. Insoweit werden während eines Scann-Prozesses mittels der Abstandsmesseinrichtung mehrere Abstände zu Messpunkten des Objekts, ggf. auch zu Referenzpunkten des Referenzkörpers gemessen. Aus diesen wird ein Oberflächenabbild des Objekts erzeugt, insbesondere rechnergestützt berechnet.

Ferner werden mittels dem ersten und dem zweiten Referenzsensor die Position und die Ausrichtung des Halters oder seines Referenzkörpers relativ zum zumindest einen Referenzobjekt ermittelt. Sofern die Vorrichtung nur einen Bewegungsfreiheitsgrad für den Halter vorsieht, ist die Implementierung von lediglich zwei typischerweise parallel ausgerichteten und senkrecht zu ihrer Messrichtung voneinander beabstandeten Referenzsensoren grundsätzlich ausreichend. In einer Weiterbildung der Vorrichtung und dementsprechend auch in einer Weiterbildung des Verfahrens ist vorgesehen, dass die Position und Ausrichtung des Halters in einer zweidimensionalen Messebene (x, z) mittels dem ersten, dem zweiten und einem dritten Referenzsensor ermittelt werden. Auf Basis der Positions- und Ausrichtungsbestimmung des Halters bzw. des Referenzkörpers wird dann das Oberflächenabbild korrigiert.

So ist insbesondere vorgesehen, dass die mittels des ersten und des zweiten Referenzsensors ermittelte Ausrichtung des Halters zur Korrektur der von der Abstandsmesseinrichtung gemessenen Abstände zwischen Messpunkten des Objekts und Referenzpunkten des Referenzkörpers verwendet werden. Auf diese Art und Weise können aufgrund geringster Neigungen oder Verkippungen des Halters bedingte Abstands-Messfehler rechnerisch kompensiert werden.

Es ist hierbei anzumerken, dass das genannte Verfahren mittels der zuvor beschriebenen Vorrichtung durchführbar ist, und dass insoweit sämtliche in Bezug auf die Vorrichtung beschriebenen Merkmale und Vorteile auch gleichermaßen für das Verfahren gelten; und umgekehrt.

Nach einem weiteren Aspekt betrifft die Erfindung ferner ein Computerprogramm zur geometrischen Vermessung eines Objekts mittels einer zuvor beschriebenen Vorrichtung. Das Computerprogramm weist Programmmittel zum scannenden Erfassen der Oberflächenkontur eines am Träger gelagerten Objekts mit Hilfe der Abstandsmesseinrichtung auf. Hierzu ist das Computerprogramm mit Programmmitteln zum Messen mehrerer Abstände zu Messpunkten des Objekts mit Hilfe der Abstandsmesseinrichtung ausgestattet. Ferner weist das Computerprogramm Programmmittel auf, mittels deren die Position und die Ausrichtung des Halters oder der daran angeordneten Abstandsmesseinrichtung relativ zum Referenzobjekt auf Basis der vom ersten und vom zweiten Referenzsensor gemessenen Abstände ermittelt werden. Schließlich sind Programmmittel zum Korrigieren des Oberflächenabbilds auf Basis der ermittelten bzw. gemessenen Position und Ausrichtung des Halters oder seines Referenzkörpers vorgesehen.

An dieser Stelle ist ferner anzumerken, dass das Computerprogramm in der mit der Vorrichtung gekoppelten Steuerung abläuft und in dieser dementsprechend implementierbar ist. Das Computerprogramm dient insbesondere der rechnergestützten Umsetzung des zuvor beschriebenen Verfahrens bei der bestimmungsgemäßen Verwendung der ebenfalls zuvor beschriebenen Vorrichtung. Insoweit gelten sämtliche im Hinblick auf die Vorrichtung und auf das Verfahren genannten Merkmale, Eigenschaften und Vorteile auch gleichermaßen für das Computerprogramm; und umgekehrt.

### Kurzbeschreibung der Figuren

Weitere Ziele, Merkmale sowie vorteilhafte Ausgestaltungen der Erfindung werden anhand der nachfolgenden Beschreibung eines exemplarischen Ausführungsbeispiels näher beschrieben. Hierbei zeigen:
- Fig. 1: zeigt eine schematische Darstellung einer nach dem Stand der Technik bekannten Vorrichtung zur geometrischen Vermessung eines Objekts,
- Fig. 2: eine der vorliegenden Entwicklung zugrunde liegende Problemstellung bei der Vermessung von Objekten mit einer vergleichsweise großen Radialerstreckung und/oder von Objekten mit einer stark gekrümmten, etwa konkav gewölbten Oberfläche,
- Fig. 3: die Abstandsmesseinrichtung gemäß der vorliegenden Erfindung nach einer ersten Ausführungsform,
- Fig. 4: eine weitere Ausführungsform der Vorrichtung,
- Fig. 5: eine weitere Ausführungsform der Vorrichtung zur geometrischen Vermessung eines Objekts,
- Fig. 6: eine vergrößerte Darstellung der am Halter angeordneten Abstandsmesseinrichtung gemäß Fig. 5 in Bezug zum einem zu vermessenden Objekt,
- Fig. 7: eine weitere Ausgestaltung der Vorrichtung,
- Fig. 8: eine gedrehte Darstellung der Vorrichtung gemäß Fig. 7 und
- Fig. 9: ein Flussdiagramm des Verfahrens.

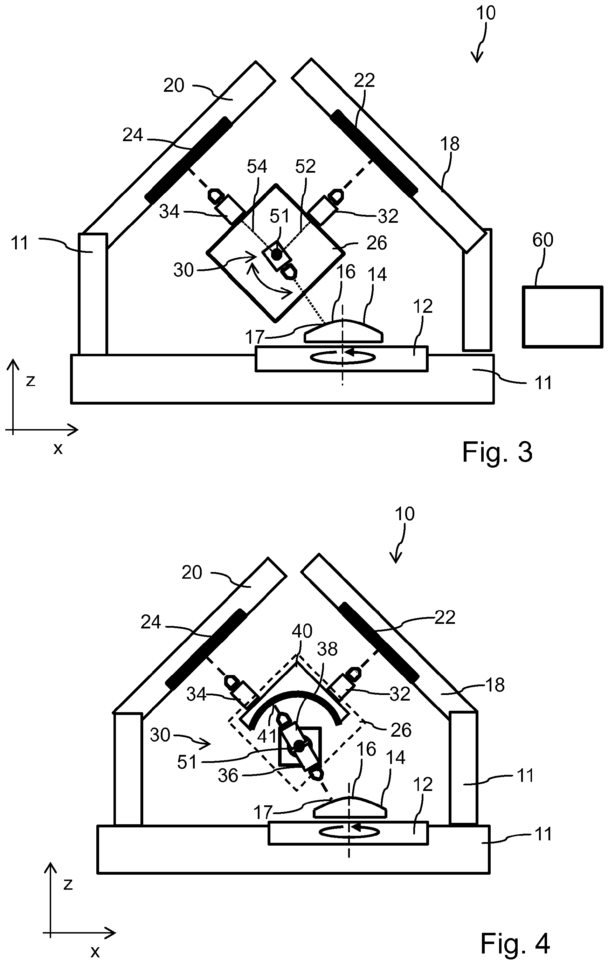

Im Vergleich zu der bereits eingangs beschriebenen und in der Fig. 1 gezeigten Vorrichtung 100 weist die erfindungsgemäße Vorrichtung 10 gemäß Fig. 3 einen Träger 12 für ein Objekt 14, beispielsweise für eine optische Komponente, zum Beispiel für eine Linse auf. Der Träger 12 definiert eine Axialrichtung (z) und eine Radialrichtung (x). Der Träger 12 und das hieran angeordnete Objekt 14 können beispielsweise drehbar gegenüber einer Basis 11 der Vorrichtung 10 gelagert sein.

Die Vorrichtung 10 weist ferner einen Halter 26 auf, welcher relativ zum Träger 12 bezüglich der Axialrichtung und bezüglich der Radialrichtung beweglich ist. Der Halter 26 ist typischerweise translatorisch sowohl bezüglich der Axialrichtung als auch bezüglich der Radialrichtung beweglich relativ zum Träger 12 gelagert. Hierfür kann eine gesonderte mechanische Baugruppe mit einzelnen Verschiebeeinheiten, beispielsweise ein- oder 2-dimensionalen Verschiebetischen vorgesehen sein. Der Träger, bzw. die Basis 11 können ortsfest installiert sein. Die Vorrichtung 10 weist ferner ein erstes Referenzobjekt 18 und ein zweites Referenzobjekt 20 auf. Die Referenzobjekte 18, 20 sind relativ zum Träger 12 fixierbar. Typischerweise sind sie relativ zum Träger 12 ortsfest an der Basis 11 angeordnet. Im vorliegend gezeigten Ausführungsbeispiel weist das erste Referenzobjekt 18 eine erste Referenzstruktur 22 auf, die sich längst des Referenzobjekts 18 an einer dem Träger 12 zugewandten Seite des Referenzobjekts 18 erstreckt.

Das zweite Referenzobjekt 20 weist eine zweite längserstreckte Referenzstruktur 24 auf, die sie ebenfalls an einer dem Träger 12 zugewandten Seite des Referenzobjekts 20 erstreckt. An dem Halter 26 ist ein erster Referenzsensor 32 angeordnet, welcher in Richtung zur ersten Referenzstruktur 22 ausgerichtet ist. Der erste Referenzsensor 32 ist typischerweise am Halter 26 angeordnet. An dem Halter 26 ist ferner ein zweiter Referenzsensor 34 angeordnet. Dieser ist in Richtung zur zweiten Referenzstruktur 24 des zweiten Referenzobjekts 20 ausgerichtet.

Der erste Referenzsensor 32 ist insbesondere senkrecht zur Längserstreckung der ersten Referenzstruktur 22 ausgerichtet. Der zweite Referenzsensor 34 ist typischerweise senkrecht zur Längserstreckung der zweiten Referenzstruktur 24 ausgerichtet. Die gedachten Verlängerungen, insbesondere eine erste gedachte Verlängerung 52 des ersten Referenzsensors 32 und eine zweite gedachte Verlängerung 54der Messrichtung des zweiten Referenzsensors 34 schneiden sich in einem gemeinsamen Schnittpunkt. Dieser gedachte Schnittpunkt fällt typischerweise mit einer Drehachse, insbesondere mit einer ersten Achse 51 des Halters 26 zusammen an oder bezüglich welcher eine Abstandsmesseinrichtung 30 schwenkbar gelagert ist.

Die Abstandsmesseinrichtung 30 weist, wie in Fig. 4 dargestellt, typischerweise zumindest einen ersten, zum Träger 12 gerichteten Abstandssensor 36 auf. Mittels des Abstandssensors 36 kann die Abstandsmesseinrichtung 30 einen Abstand zwischen dem Halter 26, insbesondere zwischen der Achse 51 des Halters 26 und einem ausgewählten Messpunkt 17 auf der Oberfläche 16 des Objektes 14 bestimmen. Für die Abstandsbestimmung zu einzelnen Messpunkten 17 muss der Abstandssensor 36 emittierte Lichtstrahl senkrecht auf den Messpunkt 17 auftreffen damit der Abstand zwischen dem Abstandssensor 36 und dem Messpunkt 17 entweder durch einen Laufzeitunterschied oder interferometrisch gemessen werden kann.

Der Abstandssensor 36, mithin die gesamte Abstandsmesseinrichtung 30 ist typischerweise faseroptisch mit einer Steuerung 60 gekoppelt, die einerseits dazu ausgebildet ist, die von der Abstandsmesseinrichtung 30 gemessen Signale oder Daten in Abstände umzurechnen und die andererseits dazu ausgebildet ist, die Oberfläche 16 des Objekts 14 punktweise oder linienweise abzutasten und dementsprechend die für die Verschiebebewegung und/oder Drehbewegung des Halters 26 und der Abstandsmesseinrichtung 30 erforderlichen Stellantriebe anzusteuern.

Die erste Achse 51, bezüglich welcher die Abstandsmesseinrichtung drehbar am Träger 26 gelagert ist, erstreckt sich typischerweise senkrecht zu der von der ersten und der zweiten Referenzstruktur 22, 24 aufgespannten Ebene.

In den Figuren 3 und 4 ist ferner gezeigt, dass die erste Referenzstruktur 22 als auch die zweite Referenzstruktur 24 gegenüber der Axialrichtung (z) geneigt ausgerichtet sind. Der Winkel zwischen der ersten Referenzstruktur 22 und der zweiten Referenzstruktur 24 beträgt in etwa 90°. Entsprechend der Ausrichtung der ersten und der zweiten Referenzstruktur 22, 24 sind auch die ersten und zweiten Referenzsensor können 32, 34 am Halter 26 ausgerichtet.

Mithin kann der gesamte Halter 26 im Vergleich zur Konfiguration gemäß dem Stand der Technik um einen vorgegebenen Winkel gedreht zu dem Träger 12 oder zur Basis 11 ausgerichtet sein. Dies ermöglicht insbesondere für den zweiten, nach dem Stand der Technik horizontal ausgerichteten Referenzsensor 34, dass dieser im Unterschied zum Stand der Technik gemäß den Ausführungsformen der Figuren 3, 4, 5, 7 und 8 schräg nach oben geneigt ausgerichtet sein kann.

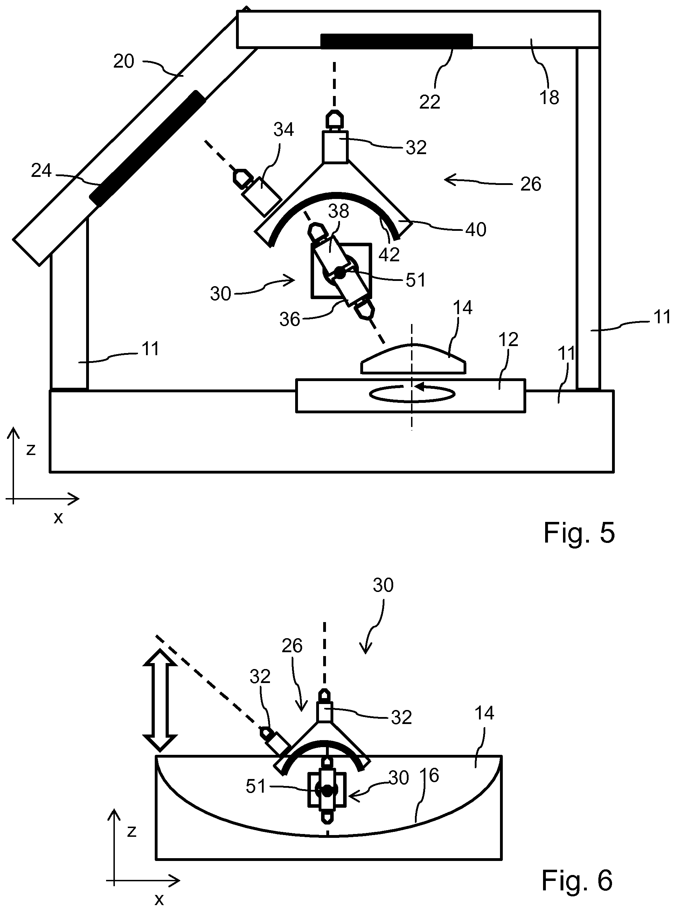

Wie insbesondere in Fig. 6 gezeigt kann insbesondere durch die nach oben geneigte Ausrichtung des zweiten Referenzsensors 34 der Messbereich der Vorrichtung in Radialrichtung (x) vergrößert werden. Zudem können auch Objektobjekte 14 mit einer vergleichsweise stark gekrümmten Oberfläche 16, insbesondere konkav gekrümmte Oberfläche 16 präzise vermessen werden.

Durch die nach oben geneigte Ausrichtung des zweiten Referenzsensors 34 ist nicht mehr zu befürchten, dass ein vom Referenzsensor ausgehender Referenzstrahl oder Messstrahl durch oder von dem Objekt 14 oder von seiner Oberfläche 16 blockiert, abgelenkt oder gestreut wird.

In der Ausgestaltung gemäß der Fig. 4 ist der Halter 26 nur noch gestrichelt gekennzeichnet. In der Ausgestaltung gemäß Fig. 5 ist er rein zu Darstellungszwecken nicht mehr explizit gezeigt. Er ist aber gleichwohl vorhanden.

Bei der Ausgestaltung der Vorrichtung 10 gemäß Fig. 4 weist die Abstandsmesseinrichtung 30 einen ersten Abstandssensor 36 auf, der in Richtung zur Oberfläche 16 des Objekts 14 ausgerichtet ist. Zudem weist die Abstandsmesseinrichtung 30 einen zweiten Abstandssensor 38 auf, der der Messrichtung des ersten Abstandssensor 36 entgegengerichtet ausgerichtet ist.

Beide Abstandssensoren 36, 38 sind drehfest miteinander verbunden. Sie sind kombiniert bezüglich der ersten Achse 51 drehbar am Halter 26 gelagert. Der zweite Abstandssensor 38 ist in Richtung zum Referenzkörper 40, insbesondere zu einer Referenzfläche 42 des Referenzkörpers 40 ausgerichtet, welcher beispielsweise einen Hohlspiegel aufweisen kann, dessen virtueller Mittelpunkt in etwa mit der ersten Achse 51 zusammenfällt. Die Geometrie des Referenzkörpers, insbesondere derjenigen zum zweiten Abstandssensor 38 gerichteten Seite ist präzise vermessen und ist in der Steuerung 60 hinterlegt.

Die konkrete Winkelstellung der Abstandsmesseinrichtung 30, mithin der beiden Abstandssensoren 36, 38 relativ zum Referenzkörper 40 kann mittels eines mit der Abstandsmesseinrichtung 30 verbunden oder mechanisch gekoppelten Drehwinkelsensors ermittelt werden. Etwaige durch die Drehung der Abstandsmesseinrichtung 30 bezüglich der ersten Achse 51 bedingte Positionsungenauigkeiten können durch und mittels der beiden Abstandssensoren 36, 38 rechnerisch kompensiert werden. Die Abstandsmesseinrichtung 30 dient der Ermittlung eines Abstandes eines Messpunkts 17 auf der Objektoberfläche 16 zu einem hiermit korrespondierenden Messpunkt 41 am Referenzkörper 40.

Bei der Ausgestaltung gemäß Fig. 5 beträgt der Winkel zwischen der ersten Referenzstruktur 22 und der zweiten Referenzstruktur 24 in etwa 120° bis 135°.

Die erste Referenzstruktur 22, mithin das erste Referenzobjekt 18 ist horizontal ausgerichtet. Es befindet sich oberhalb der Abstandsmesseinrichtung 30 sowie oberhalb des Trägers 26. Die zweite Referenzstruktur 24 und das zweite Referenzobjekt 20 sind gegenüber der Radialrichtung als auch gegenüber der Axialrichtung geneigt ausgerichtet. Um eine nach oben gerichtete Ausrichtung des zweiten Referenzsensors 34 zu ermöglichen, weist die zweite Referenzstruktur 24 mit größer werdendem axialem Abstand zum Träger 12 einen kleiner werdenden radialen Abstand zum Träger 12 auf.

Von radialinnen nach radial außen betrachtet kann die zweite Referenzstruktur 24 bzw. kann das zweite Referenzobjekt 20 nach unten, d. h. zum Träger 12 hin geneigt ausgerichtet sein.

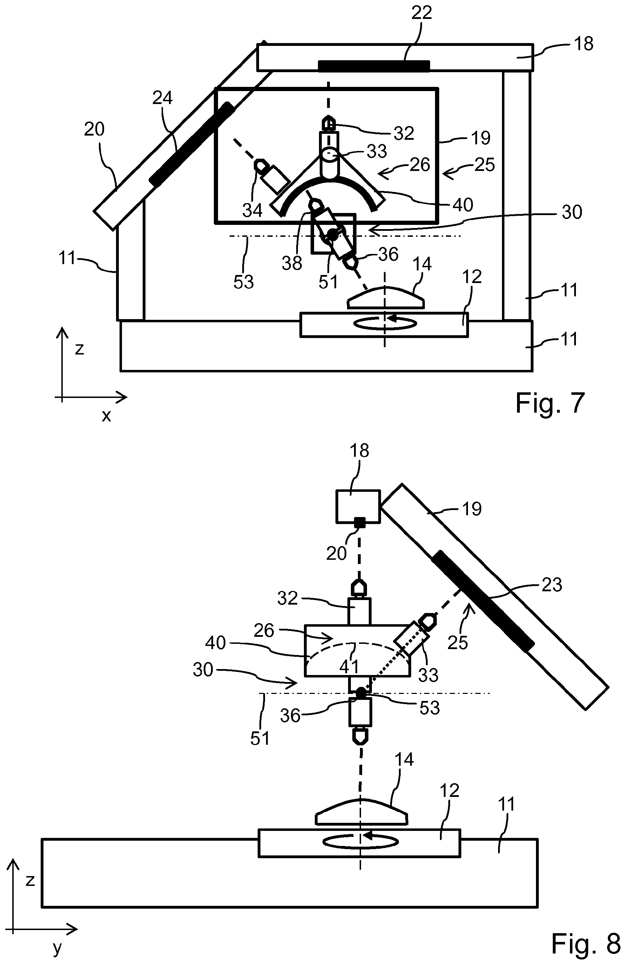

Bei der weiteren Ausgestaltung gemäß der Figuren 7 und 8 ist ferner eine dritte Referenzstruktur 23 vorgesehen, welche von einem dritten Referenzobjekt 19 bereitgestellt wird. Wie sich durch eine Zusammenschau der Figuren 7 und 8 ergibt, erstreckt sich die dritte Referenzstruktur 23 unter einem vorgegebenen Winkel sowohl zur ersten Referenzstruktur 22 als auch zur zweiten Referenzstruktur 24. Die dritte Referenzstruktur 23 kann ferner als eine Referenzebene 25 ausgestaltet sein, mithin kann das dritte Referenzobjekt 19 eine plattenartige ebene Geometrie aufweisen.

Auch das dritte Referenzobjekt 19, bzw. dessen dritte Referenzstruktur 23 kann bezüglich der Axialrichtung (z) als auch bezüglich der Radialrichtung (x) geneigt ausgerichtet sein. Wie insbesondere in Fig. 8 verdeutlicht kann die dritte Referenzstruktur 23, mithin die Referenzebene 25 mit größer werdendem axialem Abstand zum Träger 12 einen kleiner werdenden radialen Abstand zum Träger 12 aufweisen. Der dritte Referenzsensor 33 kann am Halter 26 in Richtung zur dritten Referenzstruktur 23 und demgemäß auch senkrecht zum dritten Referenzobjekt 19 ausgerichtet sein. Der dritte Referenzsensor 33 kann im Wesentlichen senkrecht zur Ebene der dritten Referenzstruktur 23 ausgerichtet sein.

Jene Anordnung ist insbesondere für eine zweidimensionale Schwenkbarkeit der Abstandsmesseinrichtung 30 von Vorteil. Wie ferner anhand der Figuren 7 und 8 dargestellt ist die Abstandsmesseinrichtung 30 bezüglich der ersten Achse 51 schwenkbar, die beispielsweise in y-Richtung verläuft. Sie ist ferner bezüglich einer zweiten Achse 53 schwenkbar, die zum Beispiel in Radialrichtung, d. h. in x-Richtung verläuft. Die erste Achse 51 kann insbesondere senkrecht zur zweiten Achse 53 verlaufen. Die beiden Achsen 51, 53 können zumindest einen virtuellen Schnittpunkt aufweisen, der typischerweise mit den gedachten Verlängerungen von zumindest zwei der Referenzsensoren 32, 33, 34 zusammenfällt.

Auf diese Art und Weise können auch äußerst komplexe Objektoberflächen 16 mittels der senkrecht zur Oberfläche 16 ausgerichteten Abstandsmesseinrichtung 30 bzw. mittels ihres Abstandssensors 36 optisch abgetastet und demgemäß vergleichsweise zügig vermessen werden. Die Schwenkbarkeit der Abstandsmesseinrichtung 30 bezüglich zweier Achsen 51, 53 ermöglicht ein zügiges orthogonal Ausrichten des Abstandssensors 36 zur Oberfläche 16 des Objekts.

Wenn die Abstandsmesseinrichtung 30 bezüglich zweier Achsen 51, 53 schwenkbar am Halter 26 gelagert und wenn die Abstandsmessung Richtung 30 mit zwei entgegengesetzt ausgerichteten Abstandssensoren 36, 38 ausgestattet ist, weist der Referenzkörper 40 typischerweise eine dreidimensionale Referenzfläche, etwa eine Spiegelfläche in Form eines sphärischen Hohlspiegels auf. Somit kann für jede Winkelstellung des zum Referenzkörper 40 gerichteten Abstandssensors 38 ein Abstand zwischen einem Messpunkt 41 auf dem Referenzkörper 40 und einem Messpunkt 17 auf der Oberfläche 16 des Objekts 14 bestimmt werden. Der Messpunkt 41 befindet sich auf der Referenzfläche 42 des Referenzkörpers 40.

Durch die Schwenkbarkeit bezüglich der zweiten Achse 53 können jedoch durch unvermeidbare mechanische Achsfehler Messungsgenauigkeiten entlang der durch die Ausrichtung der Abstandmesseinrichtung 30 vorgegebenen Messrichtung auftreten. Die Messungsgenauigkeiten können insbesondere in der Position des Halters 26 bzw. der Abstandmesseinrichtung 30 in Richtung der Flächennormalen von Axialrichtung (z) und Radialrichtung (x) liegen. Mittels der dritten Referenzstruktur 23 und dem dritten Referenzobjekt 19 und mithilfe des dritten Referenzsensors 33 können etwaige Positionsungenauigkeiten senkrecht zu derjenigen Ebene gemessen und rechnerisch kompensiert werden, die von der Axialrichtung (z) und Radialrichtung (z) aufgespannt wird. Mit anderen Worten kann ein durch die zweite schwenkbarer Lagerung der Abstandmesseinrichtung 30 bedingter Positionsfehler in y-Richtung mittels des dritten Referenzsensors 33 und mittels des dritten Referenzobjekts 19 mit einer dort vorgesehenen Referenzstruktur 23 präzise erfasst und demgemäß rechnerisch kompensiert werden.

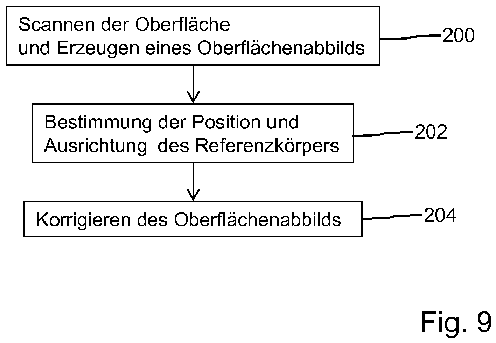

In Fig. 9 ist schließlich ein Flussdiagramm des Verfahrens dargestellt. In einem ersten Schritt 200 wird die Oberflächenkontur des am Träger 12 gelagerten Objekts 14 mittels der am Halter 26 drehbar angeordneten Abstandsmesseinrichtung 30 scannend, das heißt oberflächenabtastend erfasst. Einzelne Messpunkte 17 der Oberfläche 16 des Objekts 14 werden nacheinander mit einem Messstrahl beaufschlagt, sodass für jeden Messpunkt 17 ein Abstand zum Abstandssensor 36 ermittelt wird. Insoweit werden während eines Scannprozess mittels der Abstandsmesseinrichtung 30 eine Reihe von Abständen zu einzelnen Messpunkten 17 des Objekts 14 gemessen, bzw. Abständen zwischen den Messpunkten und Referenzpunkten am Referenzkörpers 40 gemessen. Aus diesen wird ein Oberflächenabbild des Objekts 14 erzeugt, insbesondere rechnergestützt berechnet.

In einem weiteren Schritt 202, welcher simultan zum ersten Schritt 200 abläuft werden mittels dem ersten und dem zweiten Referenzsensor 32, 34 als auch mittels des dritten Referenzsensors 33 die Position und die Ausrichtung des Halters 26 und/oder seines Referenzkörpers 40 relativ zum zumindest einen Referenzobjekt 18, 20, typischerweise zu beiden Referenzobjekten 18 und 20 ggf. auch zu dem dritten Referenzobjekt 19 ermittelt. In einem weiteren Schritt 204 auf Basis der Positions- und Ausrichtungsbestimmung des Halters bzw. des Referenzkörpers das Oberflächenabbild korrigiert.

### Bezugszeichenliste

- 10: Messvorrichtung
- 11: Basis
- 12: Träger
- 14: Objekt
- 16: Oberfläche
- 17: Messpunkt
- 18: Referenzobjekt
- 19: Referenzobjekt
- 20: Referenzobjekt
- 22: Referenzstruktur
- 23: Referenzstruktur
- 24: Referenzstruktur
- 25: Referenzfläche
- 26: Halter
- 30: Abstandsmesseinrichtung
- 32: Referenzsensor
- 33: Referenzsensor
- 34: Referenzsensor
- 36: Abstandssensor
- 38: Abstandssensor
- 40: Referenzkörper
- 41: Messpunkt
- 42: Referenzfläche
- 51: Achse
- 52: Verlängerung
- 53: Achse
- 54: Verlängerung
- 60: Steuerung
- 100: Messvorrichtung

## Patentansprüche

1. Vorrichtung zur geometrischen Vermessung eines Objekts (14), mit:
- einem Träger (12) für das Objekt (14), welcher eine Axialrichtung (z) und eine Radialrichtung (x) definiert,
- einem Halter (26), welcher relativ zum Träger (12) bezüglich der Axialrichtung (z) und bezüglich der Radialrichtung (x) beweglich ist,
- einer Abstandsmesseinrichtung (30), welche am Halter (26) angeordnet ist,
- zumindest einem Referenzobjekt (18, 19, 20), welches relativ zum Träger (12) fixierbar ist,
- wobei an einem von Halter (26) und Referenzobjekt (18, 19, 20) eine erste längserstreckte Referenzstruktur (22) und eine zweite längserstreckte Referenzstruktur (24) angeordnet sind und
- wobei an dem anderen von Halter (26) und Referenzobjekt (18, 19, 20) ein erster, zur ersten Referenzstruktur (22) ausgerichteter Referenzsensor (32) und ein zweiter, zur zweiten Referenzstruktur (24) ausgerichteter Referenzsensor (34) angeordnet sind,
- wobei die erste Referenzstruktur (22) in Radialrichtung (x) ausgerichtet ist und die zweite Referenzstruktur (24) um einen vorgegebenen Winkel gegenüber der Axialrichtung (z) geneigt ausgerichtet ist, oder
- wobei die erste Referenzstruktur (22) und die zweite Referenzstruktur (24) jeweils um einen vorgegebenen Winkel sowohl gegenüber der Radialrichtung (x) als auch gegenüber der Axialrichtung (z) ausgerichtet sind.

2. Vorrichtung nach Anspruch 1, wobei die zweite Referenzstruktur (24) mit größer werdendem axialem Abstand zum Träger (12) einen kleiner werdenden radialen Abstand zum Träger (12) aufweist.

3. Vorrichtung nach einem der vorhergehenden Ansprüche, die zweite Referenzstruktur (24) um einen Winkel zwischen 5° bis 75°, um einen Winkel zwischen 30° bis 60°, um einen Winkel zwischen 40° bis 50° oder um einen Winkel von in etwa 45° gegenüber der Axialrichtung (z) geneigt ausgerichtet ist oder wobei die zweite Referenzstruktur (24) um einen Winkel zwischen 5° bis 30°, um einen Winkel zwischen 5° bis 25°, um einen Winkel zwischen 10° bis 20° oder um einen Winkel von in etwa 15° gegenüber der Axialrichtung (z) geneigt ausgerichtet ist.

4. Vorrichtung nach einem der vorhergehenden Ansprüche, wobei die erste und die zweite längserstreckte Referenzstruktur (23, 24) an zumindest einem Referenzobjekt (18) oder an zwei zueinander fixierten Referenzobjekten (18, 20) angeordnet sind.

5. Vorrichtung nach Anspruch 4, wobei der erste Referenzsensor (32) am Halter (26) angeordnet und senkrecht zur Längserstreckung der ersten Referenzstruktur (22) ausgerichtet ist und wobei der zweite Referenzsensor (34) am Halter (26) angeordnet und senkrecht zur Längserstreckung der zweiten Referenzstruktur (24) ausgerichtet ist.

6. Vorrichtung nach einem der vorhergehenden Ansprüche, wobei die Abstandsmesseinrichtung (30) zumindest bezüglich einer ersten Achse (51) schwenkbar am Halter (24) gelagert ist.

7. Vorrichtung nach einem der vorhergehenden Ansprüche 3 bis 6, wobei die erste Achse (51) mit einem ersten Schnittpunkt einer gedachter ersten Verlängerung (52) einer ersten Messrichtung des ersten Referenzsensors (32) und einer gedachten zweiten Verlängerung (44) einer zweiten Messrichtung des zweiten Referenzsensors (34) zusammenfällt.

8. Vorrichtung nach einem der vorhergehenden Ansprüche, wobei an dem Halter (26) ein Referenzkörper (40) angeordnet ist und wobei die Abstandsmesseinrichtung (30) zur Messung eines Abstandes zwischen dem Referenzkörper (40) und einer Oberfläche (16) des Objekts (14) ausgebildet ist, wenn das Objekt (14) am Träger (12) angeordnet ist.

9. Vorrichtung nach einem der vorhergehenden Ansprüche, welche ferner eine dritte längserstreckte Referenzstruktur (23) aufweist, die an einem vom Halter (26) und dem Referenzobjekt (18) angeordnet ist und die sich unter einem vorgegebenen Winkel geneigt zur ersten Referenzstruktur (22) und zur zweiten Referenzstruktur (24) erstreckt.

10. Vorrichtung nach Anspruch 9, welche ferner einen dritten Referenzsensor (33) aufweist, der an dem anderen von Halter (26) und Referenzobjekt (18, 19, 20) angeordnet ist und welcher im Wesentlichen senkrecht zur Längserstreckung der dritten Referenzstruktur (23) ausgerichtet ist.

11. Vorrichtung nach Anspruch 9 oder 10, wobei die dritte Referenzstruktur (23) eine Referenzebene (25) aufweist, die sich unter einem vorgegebenen Winkel geneigt zur ersten Referenzstruktur (22) und zur zweiten Referenzstruktur (24) erstreckt.

12. Vorrichtung nach einem der vorhergehenden Ansprüche 6 bis 11, wobei die Abstandsmesseinrichtung (30) zumindest bezüglich einer zweiten Achse (53) schwenkbar am Halter (24) gelagert ist und wobei sich die zweite Achse (53) unter einem vorgegebenen Winkel geneigt zur ersten Achse (51) ausgerichtet ist.

13. Vorrichtung nach einem der vorhergehenden Ansprüche, wobei zumindest eine von erster und zweiter Referenzstruktur (22, 24) einen geradlinig verlaufenden längserstreckten spiegelnden Streifen aufweist.

14. Verfahren zur geometrischen Vermessung eines Objekts (14) mittels einer Vorrichtung nach einem der vorhergehenden Ansprüche, wobei die Oberfläche (16) eines am Träger (12) gelagerten Objekts (14) mittels der Abstandsmesseinrichtung (30) scannend erfasst wird, indem:
- mittels der Abstandsmesseinrichtung (30) mehrere Abstände zu Messpunkten des Objekts (14) und ein Oberflächenabbild des Objekts (14) erzeugt wird,
- mittels dem ersten und dem zweiten Referenzsensor (32, 34) eine Position und die Ausrichtung des Halters (26) oder eines daran angeordneten Referenzkörpers (40) relativ zum Referenzobjekt (18, 20) ermittelt werden, und
- das Oberflächenabbild auf Basis der Position und Ausrichtung des Halters (26) oder des Referenzkörpers (40) relativ zum Referenzobjekt (18, 20) korrigiert wird.

15. Computerprogramm zur geometrischen Vermessung eines Objekts (14) mittels einer Vorrichtung nach einem der vorhergehenden Ansprüche 1 bis 13, umfassend Programmmittel, die bei der Ausführung des Programms durch einen Computer diesen veranlassen, Schritte des Erfassens, des Messens, des Ermittelns und des Korrigierens auszuführen, mit:
- Programmmitteln zum abscannenden Erfassen der Oberflächenkontur (15) eines am Träger (12) gelagerten Objekts (14) mittels der Abstandsmesseinrichtung (30),
- Programmmitteln zum Messen mehrerer Abstände zu Messpunkten (17) an einer Oberfläche (16) des Objekts (14) und zum Erzeugen eines Oberflächenabbilds des Objekts (14),
- Programmmitteln zum Ermitteln einer Position und Ausrichtung des Halters (26) oder der Abstandsmesseinrichtung (30) relativ zum Referenzobjekt (18, 20) mittels dem ersten und dem zweiten Referenzsensor (32, 34), und
- Programmmitteln zum Korrigieren des Oberflächenabbilds auf Basis der Position und Ausrichtung des Halters (26) oder der Abstandsmesseinrichtung (30) relativ zum Referenzobjekt (18, 20).
